# EUROPÄISCHE PATENTANMELDUNG

(11) **EP 0 960 593 A2**
(43) Veröffentlichungstag der Anmeldung: **01.12.1999**
(21) Anmeldenummer: 99102428.2
(22) Anmeldetag: 09.02.1999
(51) Int. Cl.: A47L 5/36, A47L 11/40

(54) **Sicherungsvorrichtung bei mobilen Treppenreinigungsmaschine gegen Absturz**

(30) Priorität: 09.02.1998 DE 19805140
(71) Anmelder: Tennant GmbH & Co. KG, 73547 Lorch-Waldhausen (DE)
(72) Erfinder: Braunbach, Karl Heinz, Dipl.-Ing., 73614 Schorndorf (DE); Vafai, Nadar, Dipl-Ing, 71334 Waiblingen (DE); Schrammel, Thomas, 73655 Plüderhausen (DE); Weiland, Uwe, 73434 Aalen (DE); Scharbert, Reinhard, 73547 Lorch-Waldhausen (DE)
(74) Vertreter: Quarder, Heinrich

(57) **Zusammenfassung**

Die Erfindung hat eine Sicherungsvorrichtung bei mobilen, mit Laufrädern oder Laufketten versehenen Fahrtreppenreinigungsmaschinen, die bei stehender Fahrtreppe von Treppenstufe zu Treppenstufe versetzbar sind, um diese nacheinander einem Reinigungszyklus zu unter werfen, zum Gegenstand.

Mit dieser Sicherungsvorrichtung wird gewährleistet, daß eine nach wenigen Reinigungszyklen hoch auf der Fahrtreppe stehende Reinigungsmaschine nicht von den Treppenstufen aufgrund von Fehlbedienung oder Unaufmerksamkeit des Bedieners abstützen kann mit der Gefahr von Personen- und Sachschäden.

Die Sicherungsvorrichtung gegen Absturz besteht aus einer an der Reinigungsmaschine angebrachten Bremsvorrichtung (3), die einen Bremsschuhs (5) aufweist, der von einer Gleitkufe (8) gesteuert automatisch in Wirkstellung gebracht wird und eine weitere Bewegung der Reinigungsmaschine auf der Treppenstufe (4) stoppt, wenn sich die Reinigungsmaschine gegen die Kante der Treppenstufe (4) über ein vorgegebenes Maß bewegt, indem die Gleitkufe (8) über die Kante der Treppenstufe (4) abgleitet, so daß der Bremsschuh (5) in formschlüssigen und/oder kraftschlüssigen, eine weitere Bewegung gegen die Treppenkante stoppenden Kontakt mit der Treppenstufe (4) kommt.

## Beschreibung

Vorliegende Erfindung betrifft eine Sicherungsvorrichtung bei mobilen, mit Laufrädern oder Laufketten verschenen Treppenreinigungsmaschine, die auf Treppenstufen versetzt werden können, um diese nacheinander zu reinigen.

Bei einer derartigen, auf den Trittstufen versetzbaren Maschine zur Reinigung derselben ergibt sich das Problem, diese Maschine auf der Treppenstufe gegen Absturz zu sichern.

Nach wenigen Reinigungszyklen befindet sich die Maschine bereits so hoch auf der Treppe, daß ein Absturz zu großem Personenschaden bei dem Bediener oder anderen sich unterhalb der Maschine befindlichen Personen und/oder zumindest zu erheblichen Sachschäden an der Treppe und des angrenzenden Umfeldes sowie der Maschine selbst führen würde.

Aufgabe vorliegender Erfindung ist es diesem Übelstand abzuhelfen und sicherzustellen, daß eine unbeabsichtigte und gefährliche Verschiebung der Reinigungsmaschine auf den Treppenstufen verhindert wird.

Mit der Erfindung wird eine, an der Treppenreinigungsmaschine angeordnete Bremsvorrichtung vorgeschlagen, die in Aktion tritt, wenn sich die Reinigungsmachine der vorderen, freistehender Kante einer Trittstufe in gefährlicher Weise so nähert, daß die Gefahr eines Absturzes der Maschine gegeben ist.

Die Bremsvorrichtung besteht aus mindestens einem Bremsschuh, der direkt - oder indirekt über die Laufräder oder die Laufkette der Reinigungsmachine - mit der Trittfläche mindestens einer der Trittstufen, auf der die Reinigungsmaschine abgestellt ist, in Gefahrenrichtung sperrend zusammenwirkt, wenn er in Wirkstellung gebracht wird.

Dieser Vorgang kann automatisch ausgelöst werden oder mittels einer manuellen Betätigung erfolgen, wobei unter anderem eine elektromagnetische oder elektromotorische Aktorik zum Einsatz kommen kann. Ebenso ist eine halbautomatische Auslösung der Verriegelung auf der Treppe etwa beim Starten der Reinigungsmaschine möglich.

Als Bezugsgröße für die Steuerung zur Auslösung eines Brems- und/oder Verriegelungsvorgangs kann sowohl die Kanle als auch die Stirnfläche einer Trittstufe herangezogen werden.

Einzelheiten der Erfindung werden nachstehend anhand eines Ausführungsbeispiels in Verbindung mit den zugehörigen Zeichnungen näher beschrieben.
Von den Zeichnungen zeigt :
Figur 1 die perspektivische Ansicht der Laufräder einer Reinigungsmaschine mit zugehöriger Bremsvorrichtung,

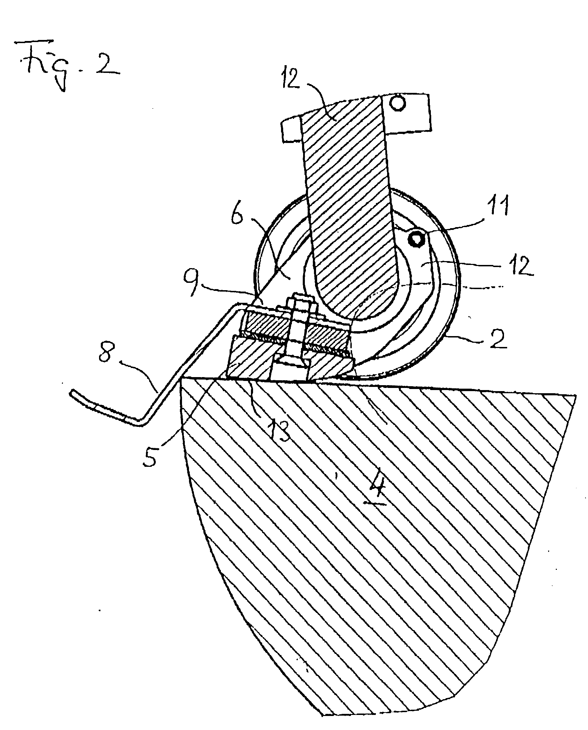

Figur 2 die in Figur 1 gezeigte Bremsvorrichtung im Schnitt und

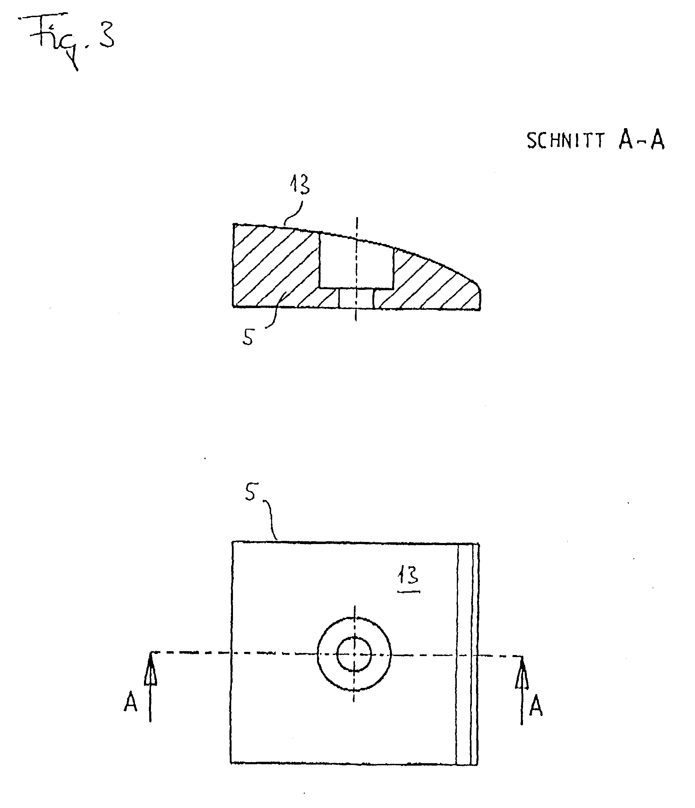

Figur 3 die Ausführung des Bremsschuhs von Figur 1 und 2.

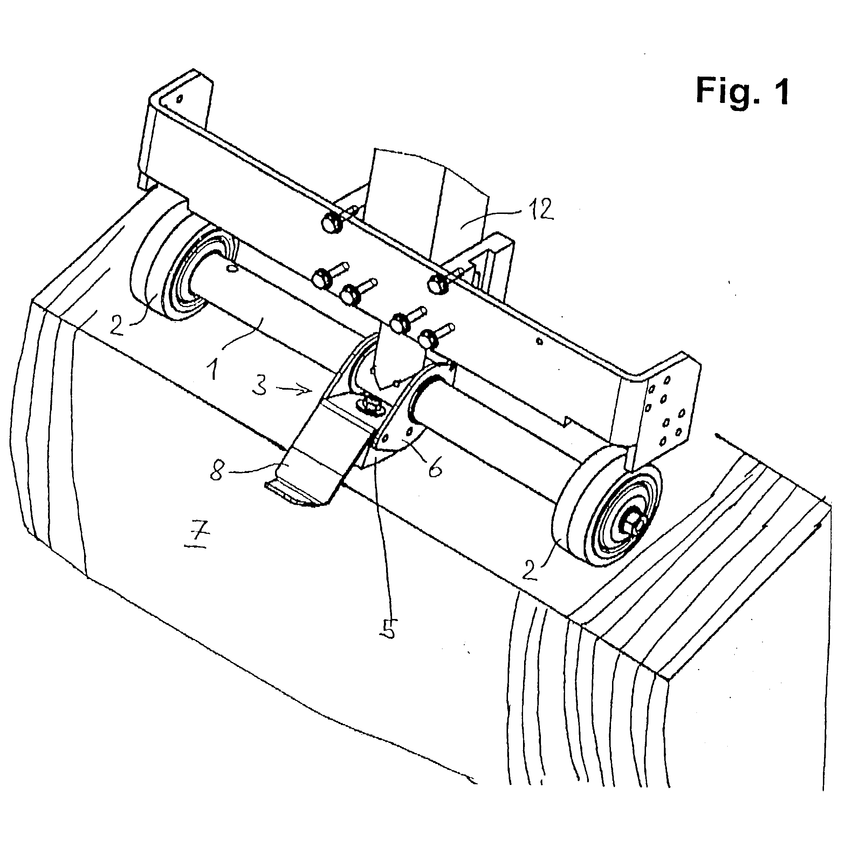

In Figur 1 ist lediglich die hintere Tragachse 1 einer nicht dargestellten Fahrtreppenreinigungsmaschine dargestellt mit ihren beiden seitlichen Rädern 2, die sich auf der Oberseite einer Trittstufe 4 abstützen. Auf der Achse 1 ist eine Bremsvorrichtung 3 schwenkbar gelagert. Sie setzt sich aus einem Schwenkarm 6, Bremsschuh 5 sowie einer Gleitkufe 8 zusammen. Der Schwenkarm 6 ist U-förmig ausgebildet und mittig sowie drehbar an der Tragachse 1 gelagert. An der Basis 9 des Schwenkarms 6 ist sowohl der Bremsschub 5 als auch die Gleitkufe 8 millels einer Schraubverbindung auswechselbar befestigt.

Ein Verbindungssteg 11 zwischen den freien Schenkeln 12 des U-förmigen Schwenkarmes 6 begrenzt den Drehbereich des Schwenkarms 6 , indem der Verbindungssteg 11 gegen die Tragsäule 12 in Anschlag kommt. Beim maximalen Auflaufen der Bremsvorrichtung erreicht die Reinigungsmaschine einen definierten Stop-Zustand, wobei gleichzeitig die Laufräder von der Oberfläche der Treppenstufe abgehoben werden, so daß ein Großteil des Gewichts der Reinigungsmaschine auf dem Bremsschuh 5 lastet, wodurch die bremswirkung erhöht wird.

Die Steuerung des Bremssystems hält das Bremselement mittels der Gleitkufe 8 außer Eingriff mit der Trittstufe, solange sich die Reinigungsmaschine in einer sicheren Position auf der Fahrtreppenstufe befindet. Rollt oder rutscht die Maschine zurück und nähert sich der Kante der Stufe 4 auf ein vorgegebenes Maß, gibt die Gleilkufe das Bremssystem frei und die Bremse stoppt die Maschine, bevor eine Gefahr für Mensch und Material entstehen kann.

Das Auflaufen des Bremsschuhs 5 wird durch die Gleitkufe 8 eingeleitet, indem diese am Ende der Treppenstufe 4 über die freistehende Kante derselben abgeleitet und dabei ermöglicht, daß der Schwenkarm 6 in Wirkstellung kommt, in der der Bremsschuh 5 auf der Treppenstufe 4 aufliegt.

Zur Vergrößerung der Haftreibung zwischen dem Bremsschuh 5 und der Treppenstufe 4 weist dieser an seiner Aufstandsfläche 13 eine Struklur auf, die beispielsweise sägezahnförmig ausgebildet sein kann und wie eine Sperrklinke eines Freilaufs wirkt. Indem sich die Struktur an der Aufstandsfläche 13 des Bremsschuhs 5 im Mikrobereich in die Trittfläche der Treppe 4 gräbt wird eine formschlüssige Verbindung bewirkt.

Alternativ kann die formschlüssige Verbindung zwischen der Treppenstufe und dem Bremsschuh auch durch andersartige Strukturierung der Aufstandsfläche des Bremsschuhs bewirkt werden. Hierzu bietet sich die Beschichtung mit Carbon-Nitrit, Hartmetall oder Diamanten an. Die gleiche Maßnahme ist angezeigt, wenn die Bremswirkung indirekt über die Laufräder oder die Laufkette der Reinigungsmaschine bewirkt werden soll, in welchem Fall diese Teile entsprechend beschichtet werden müssen.

Eine kraftschlüssige Verbindung zwischen dem Bremsschuh und der Trittstufe läßt sich in der Weise herstellen, daß der Bremsschuh komplementär zu den Trittrippen der Trittfläche ausgebildet ist, wobei die Rippen an dem Bremsschuh leicht konisch gestaltet sind, so daß sie sich in den Trittrippen der Treppenstufe verkeilen. Eine kraftschlüssige Verbindung zwischen Bremsschuh und Trittstufe ist jedoch nur in den Fällen sichergestellt, in denen noch keine Reinigungsmittel und Feuchtigkeit auf die Trittstufe aufgebracht worden sind. Eine Beschichtung der Kohärenzflächen kann auch hier für die erforderliche Reibung und gegebenenfalls Verzahnung sorgen, so daß eine sichere Festsetzung der Reinigungsmaschine auf der Treppenstufe gewährleistet ist.

Eine Beschichtung der Laufflächen der Räder oder Ketten kann auch bei der eingangs beschriebenen indirekten Festsetzung der Reinigungsmaschine auf einer Trittstufe mittels gebremster Laufräder - oder ketten hilfreich sein, wenn wegen dem Vorhandensein von Reinigungsmittel und Feuchtigkeit auf der Treppenstufe andernfalls der Reibungskoeffizient für eine sichere Handhabung und einen sicheren Betrieb zu klein wäre.
Eine reibschlüssige Verbindung der Reinigungsmaschine zu der Fahrtreppe läßt sich auch iiber elastische oder harte Werkstoffe mit hohem Reibungskoeffizienten herstellen. Die Wirkkontur des Bremssystems muß dabei jeweils dem erzielbaren Flächendruck entsprechend ausgelegt werden.

Sind die Treppenstufen bei Fahrtreppen mit einer parallel zu der Treppenkante verlaufenden V-Nut ausgestattet, kann die Festsetzung der Reinigungsmaschine auf der Treppenstufe auch iiber diese V-Nut erfolgen, indem ein Stoppelement in diese eingreift, wobei der gleiche Steuerungsmechanismus wie in vorstehend beschriebenen Ausführungsbeispielen zum Einsatz kommen kann.

Alternativ zu der beschriebenen mechanischen Steuerung kann auch eine elektronische, mit kapazitiver oder optischer Erfassung der Treppenkante arbeitende Sensorik zur Steuerung der Bremsvorrichtung herangezogen werden. Ebenso sind Tastschalter oder auf Ultraschall basierende Sensoren zur Steuerung möglich.

Bei mit Hubantrieb ausgerüsteten Reinigungsmaschinen wird durch eine entsprechend ausgelegte Steuerung der Fahrantrieb in der Arbeitsstellung der Maschine auf der Fahrtreppe so positioniert, daß auch in dieser Stellung bei einem möglichen Verrutschen zur Treppenkante hin, ab einem vorgegebenen Mindestabstand die Bremseinrichtung wirksam wird, so daß keine zusätzlichen Sicherungseinrichtungen vorgesehen werden müssen.

## Patentansprüche

1. Sicherungsvorrichtung bei mobilen Treppenreinigungsmachinen gegen Absturz derselben von einer oder mehreren Treppenstufen, gekennzeichnet durch eine an der Reinigungsmaschine angebrachte Bremsvorrichtung (3), die in Aktion tritt, sobald sich die Reinigungsmaschine in gefährlicher Weise der freistehenden Kante einer Trittstufe (4) nähert.

2. Sicherungsvorrichtung nach Anspruch 1, dadurch gekennzeichnet, daß eine Steuerung zur Aktivierung der Bremsvorrichtung (3) vorgesehen ist.

3. Sicherungsvorrichtung nach Anspruch 2 , dadurch gekenneichnet, daß die Steuerung der Bremsvorrichtung (3) mechanisch erfolgt.

4. Sicherungsvorrichtung nach Anspruch 2, dadurch gekennzeichnet, daß die Steuerung der Bremsvorrichtung (3) elektrisch mittels Tastschalter erfolgt.

5. Sicherungsvorrichtung nach Anspruch 2, dadurch gekennzeichnet, daß die Steuerung der Bremsvorrichtung (3) elektronisch erfolgt.

6. Sicherungsvorrichlung nach Anspruch 2, dadurch gekennzeichnet, daß die Steuerung der Bremsvorrichtung (3) elektronisch mittels kapazitiv arbeitendem Sensor erfolgt.

7. Sicherungsvorrichtung nach Anspruch 2, dadurch gekennzeichnet, daß die Steuerung der Bremsvorrichtung (3) optoelektronisch z.B. mittels Lichtschranke erfolgt.

8. Sicherungsvorrichtung nach Anspruch 2, dadurch gekennzeichnet, daß die Steuerung der Bremsvorrichtung (3) mittels Ultraschall erfolgt.

9. Sicherungsvorrichtung nach Anspruch 2, dadurch gekennzeichnet, daß die Steuerung der Bremsvorrichtung (3) mit der Steuerung der Reinigungsmaschine kombiniert ist.

10. Sicherungsvorrichtung nach Anspruch 1, dadurch gekennzeichnet, daß die Bremsvorrichtung einen Bremsschuh (5) aufweist, der in kraft- oder formschlüssigen Kontakt mit wenigstens einer Treppenstufe (4) gebracht werden kann.

11. Sicherungsvorrichtung nach Anspruch 10, dadurch gekennzeichnet, daß der Bremsschuh (5) an einem drehbar an der Reinigungsmaschine gelagerten Schwenkarm befestigt ist.

12. Sicherungsvorrichtung nach Anspruch 11 dadurch gekennzeichnet, daß der Drehwinkel des Schwenkarms (6) begrenzt ist.

13. Sicherungsvorrichtung nach Anspruch 11, dadurch gekennzeichnet, daß der Schwenkarm (6) mit einer Gleitkufe (8) kombiniert ist.

14. Sicherungsvorrichtung nach Anspruch 11, dadurch gekennzeichnet, daß die Gleitkufe (8) mit der Triffläche der Trittstufe (4) zusammenwirkt.

15. Sicherungsvorrichtung nach Anspruch 10, dadurch gekennzeichnet, daß der Bremsschuh (5) an einer absenkbaren Haltevorrichtung angebracht ist.

16. Sicherungsvorrichtung nach Anspruch 10, dadurch gekennzeichnet, daß das der Bremsschuh (5) starr an der Unterseite der Reinigungsmachine angebracht ist und durch Absenken derselben mit der Trittfläche einer Trittstufe (4) in Eingriff kommt.

17. Sicherungsvorrichtung nach mindestens einer der vorausgegangenen Ansprüche, dadurch gekennzeichnet, daß die Aufstandsfläche (13) des Bremsschuhs (5) strukturiert ist.

18. Sicherungsvorrichtung nach Anspruch 17, dadurch gekennzeichnet, daß die Aufstandsfläche (13) Sägezahnform aufweist.

19. Sicherungsvorrichtung nach Anspruch 17, dadurch gekennzeichnet, daß die Aufstandsfläche (13) beschichtet ist.

20. Sicherungsvorrichtung nach mindestens einer der vorausgegangenen Ansprüche dadurch gekennzeichnet, daß bei aktiver Bremsvorrichtung die Laufräder (2) oder Laufketten der Reinigungsmachine von der Trittfläche der Treppenstufe (4) abgehoben sind.

21. Sicherungsvorrichtung nach mindestens einer der vorausgegangenen Ansprüche dadurch gekennzeichnet, daß ein oder mehrere Bremskeile vorgesehen sind, die vor die Laufräder (2) oder die Laufketten gesetzt werden können.

22. Sicherungsvorrichtung nach mindestens einem der vorangegangenen Ansprüche, dadurch gekennzeichnet, daß als Bezugsgröße für die Steuerung zur Auslösung eines Brems- und Verriegelungsvorgans der Reinigungsmachine auf einer Treppenstufe (4) die Kante der Treppenstufe dient.

23. Sicherungsvorrichtung nach mindestens einem der vorangegangenen Ansprüche, dadurch gekennzeichnet, daß als Bezugsgröße für die Steuerung zur Auslösung eines Brems- und Verriegelungsvorgangs der Reinigungsmachine auf einer Treppenstufe (4) die Stirnseite der Treppenstufe vorgesehen ist.
